Europäisches Patentamt

European Patent Office

Office européen des brevets

(19)

(11) Numéro de publication : **0 120 365 B2**

(12) **NOUVEAU FASCICULE DE BREVET EUROPEEN**

(45) Date de publication du nouveau fascicule du brevet : **10.04.91 Bulletin 91/15**

(51) Int. Cl.⁵ : **H02P 7/62**

(21) Numéro de dépôt : **84102480.5**

(22) Date de dépôt : **08.03.84**

(54) **Procédé et dispositif de commande d'un moteur asynchrone à vitesse variable alimenté par un commutateur de courant.**

(30) Priorité : **14.03.83 FR 8304132**

(43) Date de publication de la demande :
**03.10.84 Bulletin 84/40**

(45) Mention de la délivrance du brevet :
**02.09.87 Bulletin 87/36**

(45) Mention de la décision concernant
l'opposition :
**10.04.91 Bulletin 91/15**

(84) Etats contractants désignés :
**BE CH DE FR GB IT LI NL SE**

(56) Documents cités :
**EP-A- 0 061 604**
**DE-A- 2 418 322**
**DE-A- 2 804 050**
**DE-B- 1 236 640**
**FR-A- 2 366 740**
**US-A- 4 314 190**

(56) Documents cités :
**IEEE TRANSACTIONS ON INDUSTRY APPLI-CATIONS; vol. IA-15, no. 4, juillet/août 1979, pages 430-436, IEEE, New York, US A.B. PLUN-KETT et al.: "Synchronous control of a static AC induction motor drive"**
**IEEE TRANSACTIONS ON INDUSTRY APPLI-CATIONS : vol.IA-11,no.5,sept./oct.1975 pp.483-488.**
**Abbondanti et al:Variable speed induction motors drives use electronic slip calculator based on motor voltages and currents.**

(73) Titulaire : **ALSTHOM**
**38, avenue Kléber**
**F-75784 Paris Cédex 16 (FR)**

(72) Inventeur : **Chollet, Gérard**
**1, route Neuve**
**F-69540 Irigny (FR)**

(74) Mandataire : **Weinmiller, Jürgen et al**
**Lennéstrasse 9 Postfach 24**
**W-8133 Feldafing (DE)**

EP 0 120 365 B2

## Description

L'invention concerne un procédé et un dispositif de commande d'un moteur asynchrone à vitesse variable alimenté par un commutateur de courant.

L'utilisation à vitesse variable d'un moteur asynchrone fait appel à une alimentation en courant alternatif à fréquence variable, généralement obtenue par des onduleurs autonomes, qui sont des convertisseurs continu-alternatif. Il existe deux types d'onduleurs : les onduleurs de tension et les onduleurs de courant, qui génèrent, à partir respectivement d'une tension et d'un courant continus, une tension et un courant périodiques à fréquence variable. L'intérêt des onduleurs de courant est bien connu : en particulier, ils font appel à des semi-conducteurs de puissance moins rapides, et à moins de condensateurs, que les onduleurs de tension. De plus, le circuit électrique est, de par son principe, plus sûr en cas de défaut d'allumage des semi-conducteurs car le courant est limité par le générateur de courant continu.

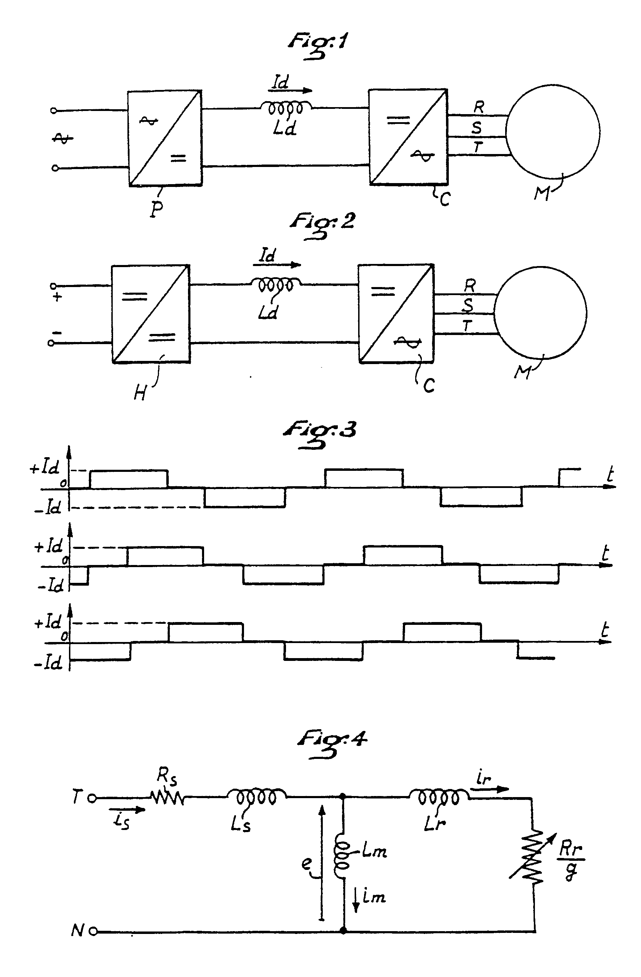

Pour alimenter un onduleur de courant, également appelé commutateur de courant, on utilise comme générateur de courant continu soit un dispositif à pont dedresseur commandé P (figure 1), soit un dispositif à hacheur H (figure 2) suivant que le réseau est respectivement alternatif ou continu, associé à un système de filtrage constitué par une inductance de lissage Ld.

Le générateur de courant continu (pont redresseur ou hacheur, associé à l'inductance) doit être reversible afin de permettre à la machine de fonctionner soit en moteur (traction) soit en génératrice asynchrone (freinage). Dans ce cas, si le réseau est alternatif, le pont utilisé doit être complet. Si le réseau est continu, le hacheur est utilisé en abaisseur de tension en traction, ou en élévateur de tension en freinage par récupération d'énergie vers le réseau.

L'onduleur ou commutateur de courant C, est un convertisseur à semi-conducteurs commandés, transformant le courant continu Id fourni par le générateur de courant en un courant alternatif alimentant le moteur asynchrone M. Sa fréquence et sa phase de fonctionnement sont réglées par la commande de l'allumage des semi-conducteurs.

L'onde de courant délivrée par ce commutateur, sur chaque phase, est indiquée figure 3 dans le cas d'un moteur triphasé. Elle est du type 1/3-2/3, l'amplitude maximale étant Id.

Divers procédés existent pour commander cette chaîne composée du générateur de courant continu, du commutateur de courant et du moteur asynchrone. Les deux plus classiques sont les suivants :

– commande à flux imposé dans le moteur, connue aussi sous le terme de commande à U/F constant ; un tel procédé est décrit dans le document DE-A-2 804 050, dans lequel la commande d'allumage des semi-conducteurs est déterminée à partir de l'angle existant entre le courant et la tension aux bornes du moteur, et par rapport aux passages à zéro de la tension aux bornes du moteur ;

– commande à fréquence glissée imposée, la fréquence glissée étant égale à la différence entre la fréquence stator et la fréquence rotor.

Ce deuxième procédé possède de nombreux avantages, en revanche sa réalisation pratique est difficile : d'une part il faut utiliser des capteurs de vitesse précis pour mesurer la différence entre la fréquence stator et la fréquence rotor, c'est-à-dire entre deux grandeurs très voisines ; d'autre part il faut apporter une correction à la mesure afin d'obtenir le couple demandé, en raison des variations de résistance du rotor en fonction de la température. Ce dernier point implique donc un capteur de température à implanter dans le moteur.

Il est également connu de commander en fréquence le commutateur de courant de manière à imposer au moteur un angle de déphasage donné entre la composante fondamentale de tension aux bornes de l'inductance magnétisante et la composante fondamentale du courant statorique dans chaque phase du moteur mais cela conduit à des asservissements complexes nécessitant une mesure de déphasage délicate entre des composantes fondamentales de grandeurs non sinusoïdales variant en fréquence.

La présente invention a pour but une commande de moteurs asynchrones présentant les avantages d'une commande à fréquence glissée sans en avoir les difficultés de réalisation ni avoir la complexité des asservissements à angle de déphasage, c'est-à-dire ne nécessitant pas der mesure de l'angle entre la composante fondamentale de tension aux bornes de l'inductance magnétisante et la composante fondamentale du courant statorique dans chaque phase du moteur. Ce but est atteint par le procédé tel que défini dans la revendication 1.

Elle a également pour objet un dispositif de commande d'un moteur asynchrone à vitesse variable alimenté en courant alternatif par un commutateur de courant à semi-conducteurs commandés contrôlant l'alimentation en courant des enroulements de phase du stator du moteur à partir du courant continu fourni par un générateur de courant. Ce dispositif comporte :

– des moyens de détection des passages des composantes fondamentales des tensions aux bornes des inductances magnétisantes des enroulements de phase du stator par un angle de phase arbitraire mais constant déterminant des instants d'origine de retard d'allumage pour les semi-conducteurs commandés du commutateur de courant,

– des moyens de mesure de la fréquence statorique,

– des moyens de calcul de déphasage délivrant une valeur de déphasage souhaitable entre les composantes fondamentales de la tension aux bornes de l'inductance magnétisante et le courant dans chaque enroulement de phase du stator, ladite valeur résultant de l'application d'une loi de définition préétablie en fonction de la valeur de la fréquence statorique délivrée par les moyens de mesure et d'une grandeur de consigne représentative d'un ordre de traction ou de freinage,

– des moyens de calcul de retard délivrant une durée de retard d'allumage à imposer aux semi-conducteurs commandés du commutateur de courant déduite de la fréquence statorique et délivrée par les moyens de mesure et de la valeur de déphasage délivrée par le moyen de calcul de déphasage,

– et des moyens de commande de l'allumage retardé des semi-conducteurs du commutateur de courant opérant sous le contrôle des moyens de détection et des moyens de calcul de retard.

Avec ce procédé et ce dispositif, il est seulement nécessaire de mesurer le passage par un angle de phase donné d'une grandeur électrique statorique du moteur en fonctionnement, flux ou tension, ce qui peut se faire par une simple détection de passages par zéro et qui est beaucoup plus simple que la mesure d'un angle de déphasage entre les fondamentales de grandeurs électriques non sinusoïdales.

Selon un mode préféré de réalisation les moyens de commande d'allumage retardé des semi-conducteurs du commutateur de courant sont des compteurs recevant d'une part des moyens de détection, une information de départ du retard d'allumage, d'autre part des moyens de calcul de retard une information de durée du retard d'allumage, et délivrant à l'expiration de cette durée un ordre de commande d'allumage.

A titre d'exemple, on a représenté au dessin annexé :

Figure 1, un schéma symbolique d'un dispositif connu d'alimentation d'un moteur asynchrone par un onduleur à partir d'un réseau alternatif ;

Figure 2, un schéma symbolique d'un dispositif connu d'alimentation d'un moteur asynchrone par un onduleur à partir d'un réseau continu ;

Figure 3, une représentation de l'onde de courant délivrée par un commutateur de courant a chaque phase d'un moteur asynchrone dans le cas des Figures 1 et 2.

Figure 4, un schéma électrique équivalent à chaque phase d'un moteur asynchrone ;

Figure 5, un schéma de principe du procédé de commande selon l'invention ;

Figure 6, un schéma symbolique du circuit de commande selon l'invention du commutateur de courant alimentant le moteur asynchrone ;

Figure 7, un schéma électrique simplifié d'un commutateur de courant pour la commande d'un moteur asynchrone.

En se reportant au dessin, on peut voir, figures 1 et 2, que le moteur asynchrone M de type triphasé par exemple, est alimenté par un commutateur de courant C en courant alternatif sur ses trois phases R, S, T. Le commutateur de courant assure la conversion en alternatif du courant continu Id en provenance du générateur de courant continu. Ce courant Id est le courant filtré par l'inductance de lissage Ld.

Il est fourni par un pont redresser P (figure 1) à partir d'un réseau alternatif, ou par un hacheur H (figure 2) à partir d'un réseau continu.

Selon la figure 3, on voit que l'amplitude maximale du courant transmis à chaque phase R, S, T du moteur asynchrone est égale à Id, valeur du courant fourni par le générateur de courant continu P (figure 1) ou H (figure 2) associé à l'inductance de lissage Ld.

La figure 4 représente le schéma équivalent par phase du moteur asynchrone, entre les points N (neutre) et T (de phase T), par exemple. Il est composé de la résistance Rs et de l'inductance Ls du stator, de l'inductance magnétisante Lm, de l'inductance équivalente Lr et de la résistance équivalente

$$\frac{Rr}{g}$$

du rotor en fonction du glissement g. Les références is et ir représentent les courants de stator et de rotor équivalents par phase, im représente le courant magnétisant ete la tension aux bornes de l'inductance magnétisante Lm (mutuelle inductance entre les bobinages de stator et de rotor).

La figure 4 permet de définir une certaine grandeur appelée "angle interne $\rho i$" utile à la compréhension de l'invention. Soit is la valeur de la composante fondamentale (harmonique 1) du courant dans une phase de stator. Soit e la valeur de la composante fondamentale (harmonique 1) de la tension apparaissant aux bornes de l'inductance magnétisante dans la même phase.

On appelle $\rho i$ l'angle de déphasage entre ce courant is et cette tension e.

Toutes les grandeurs fondamentales de la machine peuvent s'exprimer en fonction de cet angle interne pi, en particulier :

$$\text{fréquence glissée} = f\ \text{stator} - f\ \text{rotor} = \frac{Rr}{2\pi(Kr+Lm)\ tg\ \rho i} \quad (1)$$

Couple électromécanique = $Cm = k\ Lm\ I_D^2\ \sin 2\ Pi$ (2) Id étant la valeur du courant fourni au commutateur de courant par le générateur de courant, et k une constante.

L'équation (1) montre bien l'équivalence entre une commande à fréquence glissée imposée, et une commande à angle interne $p_i$ imposé, lorsque la résistance Rr est constante, car les deux grandeurs "fréquence glissée" et "angle interne" sont liées par une équation unique.

Cependant, le pilotage direct de l'angle $p_i$, pour obtenir un couple Cm, permet de s'affranchir de la variation de la résistance Rr du rotor en fonction de la température.

Enfin, pour asservir la fréquence glissée, il n'est plus nécessaire de mesurer les fréquences de stator et de rotor, et donc d'utiliser un capteur de vitesse.

L'équation (2) montre que pour obtenir un couple électromécanique donné sur l'arbre de la machine, il suffit d'imposer une valeur au courant Id et une valeur à l'angle $p_i$. Ces deux variables sont indépendantes l'une de l'autre.

De plus, pour une certaine loi d'angle $p_i$ imposée, on peut faire varier facilement le couple qui n'est plus fonction que du carré de courant Id.

Le moteur asynchrone M peut fonctionner aussi bien en moteur qu'en générateur. Si l'angle interne est compris entre 0° et 90°, limites exclues, le couple électromécanique est positif et le moteur M fonctionne en moteur, c'est-à-dire en traction. Si l'angle interne est compris entre 90° et 180°, limites exclues, le couple est négatif et le moteur M fonctionne en générateur, c'est-à-dire en freinage. Le courant Id (figures 1 et 2) ne change pas de sens, mais la tension moyenne à l'entrée du commutateur de courant s'inverse.

La figure 5 illustre schématiquement un circuit de commande de moteur imposant comme valeurs de consigne d'une part l'angle interne Pi et d'autre part le courant continu Id. La consigne d'angle interne est appliquée à un circuit 1 de réglage de l'angle interne qui commande le commutateur de courant C. La consigne de courant Id est appliquée à un circuit 2 d'asservissement du courant Id qui commande le générateur de courant continu H ou P lui-même alimenté par le réseau. Le courant Id est appliqué par le générateur H ou P au commutateur de courant C qui alimente le moteur M. Le moteur M à son tour fournit un couple électromécanique défini par la formule 2 en fonction de Id et de l'angle interne.

L'asservissement du courant Id, par exemple par régulation de courant en boucle fermée, fait partie de l'état de la technique et n'est pas décrit plus avant.

Le circuit 1 de la figure 5 est détaillé sur la figure 6. Sur cette figure 6 sont symbolisés en 3 des capteurs de tension ou de flux pour chacune des phases du moteur M, en 4 des interfaces assurant des corrections éventuelles, en 5 des circuits de génération de références temporelles définissant pour chaque semi-conducteur commandé du commutateur de courant C l'instant to théorique d'allumage, c'est-à-dire l'instant de départ du retard d'allumage qui va être appliqué chaque semi-conducteur et qui correspond à l'instant précis où la phase de la tension aux bornes de l'inductance magnétisante de l'enrouleur statorique concernée passe par une valeur arbitraire mais constante.

A partir de ces instants to, respectivement to 1 à to 6 dans l'exemple décrit, un circuit 6 détermine la fréquence fs de stator pour l'appliquer à un circuit 7 de calcul du retard d'allumage et à un circuit 8 de calcul de déphasage qui élabore la valeur de l'angle interne $p_i$ en fonction de paramètres choisis du système d'entraînement à vitesse variable du moteur asynchrone M. Il reçoit une information de fréquence fs de stator, ou une information de vitesse, linéaire ou de rotation, ou une information relative à une autre paramètre de fonctionnement, et les ordres de traction ou de freinage en p. A titre d'illustration, la représentation d'une loi de variation de l'angle interne en fonction de la vitesse de rotation est portée dans le cadre 8. D'autres lois peuvent également être utilisées. L'élaboration de la valeur $p_i$ peut être réalisée par un circuit électronique numérique ou analogique. Dans ce dernier cas, des interfaces sont nécessaires pour fournir la valeur numérique de $p_i$ nécessaire au calcul du retard dans le circuit 7. Le circuit 8 de calcul de déphasage applique au circuit de calcul de retard 7 la valeur numérique $p_i$.

En fonction de la fréquence fs de stator et de l'angle interne $\varphi_i$, le circuit 7 définit, par une loi interne programmée, correspondant à une relation mathématique bien définie dans laquelle interviennent les caractéristiques électrotechniques de l'ensemble du commutateur de courant C et du moteur M, la valeur du retard $\Delta t$ à appliquer à la commande d'allumage de chacun des semi-conducteurs commandés du commutateur de courant. L'allumage séquentiel de ces semi-conducteurs assure la commutation du courant Id d'une phase du moteur M à l'autre.

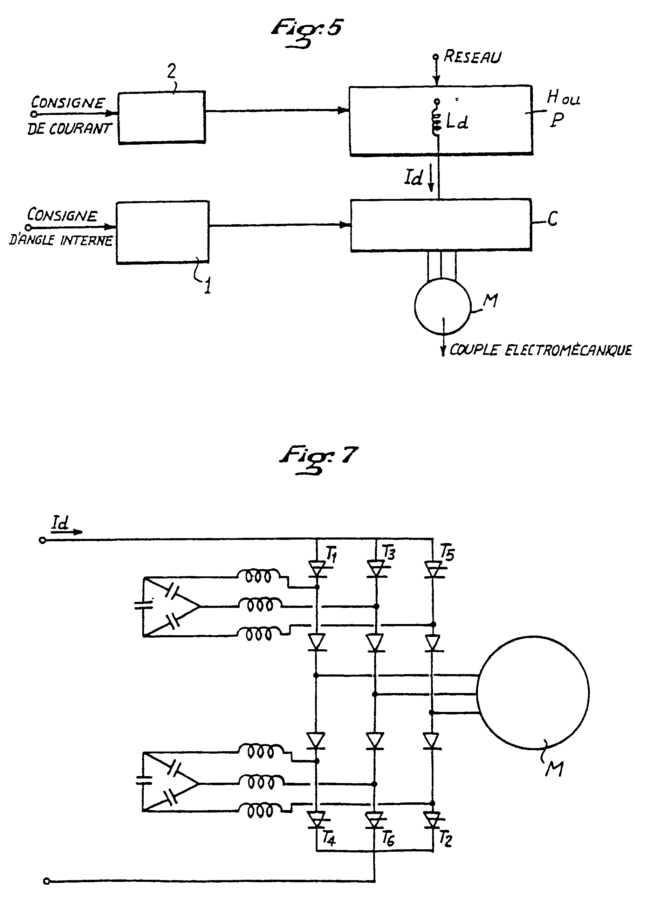

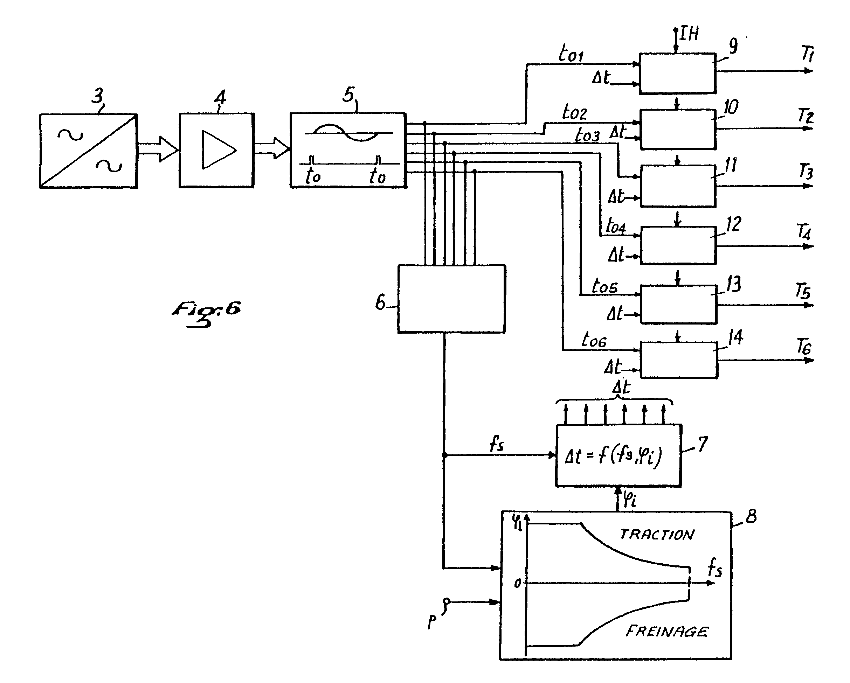

Sur la figure 7, est représenté le schéma d'un commutateur de courant classique associé à un moteur asynchrone M. Les selfs, capacités et diodes du commutateur de courant sont représentées de façon classique.

Les semi-conducteurs commandés sont symbolisés par des thyristors T1 à T6, mais peuvent être constitués par des soupapes électriques quelconques, par exemple par des transistors, ou des thyristors à commande d'extinction par la gachette (GTO) avec des schémas adaptés en conséquence.

Dans l'exemple de réalisation représenté, le moteur asynchrone M est triphasé. Les schémas des figures 6 et 7 sont facilement transposables aux cas de moteurs ayant un nombre de phases différent de 3.

En revenant à la figure 6, on voit que les instants to d'allumage théorique d'une part, et les valeurs du retard d'allumage $\Delta t$ à appliquer à chaque semi-conducteur commandé d'autre part, sont appliqués à une série de compteurs 9 à 14, une pour chaque semi-conducteur commandé du commutateur de courant. Chaque compteur reçoit par ailleurs des impulsions d'horloge IH, qui sont admises et comptées pour définir la durée Δt. Le fonctionnement du circuit de la figure 6 s'analyse de la manière suivante : à partir des capteurs 3 qui mesurent chacun par exemple une tension du moteur corrigée de la chute de tension interne au stator, les circuits 5 délivrent des impulsions aux instants to de référence de phase, correspondant aux passages par une valeur arbitraire mais constante de la phase des tensions aux bornes des inductances magnétisantes des phases du stator raccordées aux différents bras du commutateur de courant munis chacun d'un semi-conducteur commandé. Ces instants de référence de phase correspondent par exemple aux passages par zéro dans le sens croissant de la tension, ou du flux, dans l'inductance magnétisante de la phase correspondante du stator. Ils constituent des références périodiques temporelles de la phase de tension interne aux bornes de l'inductance magnétisante.

Chacune de ces impulsions, aux instants to, enclenche un compteur 9-14 qui va compter les impulsions d'horloge IH en nombre correspondant à la valeur du retard Δt d'allumage défini par le circuit de calcul 7.

Dans l'exemple décrit, on utilise des compteurs 9-14, mais ils peuvent être remplacés par tout autre système permettant de donner un signal de sortie décalé de Δt par rapport au signal d'entrée to.

A la fin de la durée de comptage correspondant au retard Δt, le compteur délivre à sa sortie une impulsion d'allumage du semi-conducteur T1 à T6 (figure 7) correspondant au compteur. C'est l'allumage retardé de ce semi-conducteur qui va permettre la commutation du courant d'une phase du moteur à la suivante, à un instant tel que le déphasage entre le fondamental du courant et le fondamental de la tension aux bornes de l'inductance magnétisante soit égal à l'angle interne pi.

Chacun des compteurs est individuellement programmé avant chaque allumage, à la valeur de ce retard calculé Δt afin d'obtenir l'angle pi souhaité. Cette valeur Δt est donc fonction de pi et de la fréquence $f_s$ de stator. Cette fréquence est simplement mesurée par la période correspondant au temps écoulé entre deux impulsions de référence à deux instants to consécutifs.

L'angle pi est fixé selon les caractéristiques et/ou les performances que l'on désire obtenir du système à vitesse variable. Ce peut être par exemple l'optimisation du fonctionnement du système dans toute la plage de vitesse et/ou tout autre loi du pilotage plus ou moins élaborée.

Dans le cas particulier cité à titre d'exemple d'une motrice fonctionnant en traction, on cherche souvent à réaliser une caractéristique effort-vitesse F(v) avant l'allure d'une portion d'hyperbole comme celle représenté dans le cadre 8 (figure 6). Dans ce cas, la relation (2) montre que si le courant Id est maintenu constant, pi sera fixé en fonction de la vitesse du véhicule par la loi suivante :

a) De O à Vd (vitesse de base ou de définition), le système fonctionnant à flux et à couple constant, φi sera maintenu constant (premier segment perpendiculaire à l'axe des ordonnées).

b) De Vd à Vmax (vitesse maximale), le système fonctionnant à puissance constante, pi suivra une loi à allure hyperbolique en fonction de la vitesse.

Mais il est évidemment possible de fixer d'autres lois de variation de pi.

On peut, pour tenir compte des limites d'adhérence, choisir une loi linéaire décroissantee pour F (donc pour sin 2 pi) entre O et Vd.

On peut aussi ne pas maintenir Id constant et faire varier simultanément Id et pi tout en réalisant les caractéristiques déjà évoquées de l'effort en fonction de la vitesse.

Le procédé peut bien entendu être utilisé pour d'autres applications, en particulier pour des systèmes d'entrainement industriels correspondant à des lois différentes du couple en fonction de la vitesse.

La mise en oeuvre du procédé selon l'invention est très bien adaptée aux technologies numériques soit à partir de circuits logiques câblés, soit à partir de logiques programmées. On peut utiliser par exemple un microprocesseur, ce qui simplifie le matériel et permet de programmer ou de modifier des lois d'angle interne pi complexes, en fonction des applications proposées.

## Revendications

1. Procédé de commande d'un moteur asynchrone (M) à vitesse variable, alimenté en courant alternatif par un commutateur de courant (C) à semi-conducteurs commandés ($T_1..T_6$) contrôlant l'alimentation des enroulements de phase du stator du moteur (M) à partir du courant continu fourni par un générateur de courant (P, H), où le courant (Id) circulant dans le commutateur (C) est maintenu à une valeur ajustable et où le commutateur de courant (C) est contrôlé en imposant à ses semi-conducteurs commandés ($T_1..T_6$) un retard à l'allumage (ΔT) caractérisé en ce que ledit retard à l'allumage (ΔT) est défini par rapport à des instants d'origine ($t_{01}..t_{06}$) correspondant aux passages des vecteurs représentant les composantes fondamentales des tensions (e) aux bornes des inductances magnétisantes équivalentes (Lm) de chaque phase par un angle de phase d'une valeur prédéterminée, et déterminé à partir des caractéristiques du moteur pour obtenir entre les composantes fondamentales des tensions (e) aux bornes des inductances magnétisantes équivalentes (Lm) et des courants équivalents (is) dans chaque phase un angle interne de déphasage (φi) déduit, sans le mesurer, ainsi que le courant (Id), d'une loi de définition préétablie en fonction des conditions d'utilisation du moteur (M).

2. Dispositif de commande d'un moteur asynchrone (M) à vitesse variable alimenté en courant alternatif par un commutateur de courant (C) à semiconducteurs commandés (T₁..T₆) contrôlant l'alimentation des enroulements de phase du stator du moteur (M) à partir du courant continu fourni par un générateur de courant (P, H) caractérisé en ce qu'il comporte :

– des moyens de détection (3, 4, 5) des passages des composantes fondamentales des tensions (e) aux bornes des inductances magnétisantes (Lm) des enroulements de phase du stator par un angle de phase arbitraire mais constant déterminant des instants d'origine (t₀₁..t₀₆) de retard d'allumage des semi-conducteurs commandés (T₁...T₆) du commutateur de courant (C),

– des moyens (6) de mesure de la fréquence statorique (fs),

– des moyens de calcul de déphasage (8) délivrant une valeur de déphasage souhaitable (φi) entre les composantes fondamentales de la tension (e) aux bornes de l'inductance magnétisante (Lm) et le courant (is) dans chaque enroulement de phase du stator, ladite valeur (φi) résultant de l'application d'une loi de définition préétablie en fonction de la valeur de la fréquence statorique (fs) délivrée par les moyens de mesure (6) et d'une grandeur de consigne (p) représentative d'un ordre de tractions ou de freinage,

– des moyens de calcul de retard (7) délivrant une durée de retard (ΔT) d'allumage à imposer aux semi-conducteurs commandés (T₁,... T₆) du commutateur de courant (c) déduite de la fréquence statorique (fₛ) délivrée par les moyens de mesure (6) et de la valeur de déphasage (φi) délivrée par les moyens de calcul de déphasage (8)

– et des moyens de commande d'allumage retardé (9,.. 14) des semi-conducteurs (T₁..T₆) du commutateur de courant (C) opérant sous le contrôle des moyens de détection (3, 4, 5) et de calcul de retard (7).

3. Dispositif selon la revendication 2, caractérisé en ce que les moyens de détection comportent des capteurs de tension ou de flux (3).

4. Dispositif selon la revendication 2, caractérisé en ce que les moyens de commande d'allumage retardé (9... 14) sont des compteurs déclenchés par les moyens de détection (3, 4, 5) et chargé avec une durée de comptage (ΔT) par les moyens de calcul de retard (7).

**Ansprüche**

1. Verfahren zur Steuerung eines Asynchronmotors (M) variabler Geschwindigkeit, wobei der Motor von einem mit gesteuerten Halbleitern (T₁...T₆) ausgerüsteten Wechselrichter (C) mit Wechselstrom gespeist wird, der die Speisung der Phasenwicklungen des Stators des Motors (M) aufgrund des von einem Stromgenerator (P, H) gelieferten Gleichstroms regelt, wobei der Strom (Id) im Wechselrichter (C) auf einem wählbaren Wert gehalten wird und der Wechselrichter (C) so geregelt wird, daß seine gesteuerten Halbleiter (T₁...T₆) eine Zündverzögerung (ΔT) erhalten, dadurch gekennzeichnet, daß die Zündverzögerung (ΔT) relativ zu Ursprungszeitpunkten (t₀₁...t₀₆) definiert ist, welche den Durchgängen der die Fundamentalkomponenten der Spannungen (e) an den Klemmen der äquivalenten magnetisierenden Induktanzen (Lm) jeder Phase repräsentierenden Vektoren durch einen Phasenwinkel eines vorgegebenen Werts entsprechen, und daß sie ausgehend von Motorkennwerten bestimmt wird, um zwischen den Fundamentalkomponenten der Spannungen (e) an den Klemmen der äquivalenten magnetisierenden Induktanzen (Lm) und äquivalenten Strömen (is) in jeder Phase einen internen Phasenwinkel (φi) zu erhalten, der, ohne gemessen zu werden, ebenso wie der Strom (Id), von einem zuvor aufgestellten Definitionsgesetz in Abhängigkeit von den Verwendungsbedingungen des Motors (M) abgeleitet wird.

2. Vorrichtung zur Steuerung eines Asynchronmotors (M) variabler Geschwindigkeit, wobei der Motor von einem mit gesteuerten Halbleitern (T₁...T₆) ausgerüsteten Wechselrichter (C) mit Wechselstrom gespeist wird, der die Speisung der Phasenwicklungen des Stators des Motors (M) aufgrund des von einem Stromgenerator (P, H) gelieferten Gleichstroms regelt, dadurch gekennzeichnet, daß sie aufweist :

– Mittel (3, 4, 5) zur Erfassung der Durchgänge der Fundamentalkomponenten der Spannungen (e) an den Klemmen der magnetisierenden Induktanzen (Lm) der Phasenwicklungen des Stators durch einen frei wählbaren, aber gleichbleibenden Phasenwinkel, der die Ursprungszeitpunkte (t₀₁...t₀₆) für die Zündverzögerung der gesteuerten Halbleiter (T₁...T₆) des Wechselrichters (C) bestimmt,

– Mittel (6) zur Messung der Statorfrequenz (fs),

– Mittel zur Phasenverschiebungsberechnung (8), die einen gewünschten Wert (φi) der Phasenverschiebung zwischen den Fundamentalkomponenten der Spannung (e) an den Klemmen der magnetisierenden Induktanz (Lm) und dem Strom (is) in jeder Phasenwicklung des Stators liefert, wobei dieser Wert (φi) aus der Anwendung eines zuvor in Abhängigkeit von der Größe der Statorfrequenz (fₛ) aufgestellten Definitionsgesetzes resultiert, die von den Meßmitteln (6) und von einer Sollgröße (p) geliefert wird, die für einen Fahr- oder Bremsbefehl repräsentativ ist,

– Mittel (7) zur Verzögerungsberechnung, die eine Zündverzögerungsdauer ($\Delta T$) liefern, die den gesteuerten Halbleitern ($T_1...T_6$) des Wechselrichters (C) aufzuprägen ist und von der durch die Meßmittel (6) gelieferten Statorfrequenz ($f_s$) und vom Phasenverschiebungswert ($\varphi i$) abgeleitet wird, der von den Phasenverschiebungsberechnungsmitteln (8) geliefert wird,

– und Mittel (9,...14) zur verzögerten Zündsteuerung der Halbleiter ($T_1...T_6$) des Wechselrichters (C), die unter der Kontrolle der Erfassungsmittel (3, 4, 5) und der Verzögerungsberechnungsmittel (7) wirksam werden.

3. Vorrichtung nach Anspruch 2, dadurch gekennzeichnet, daß die Erfassungsmittel Sonden zur Messung der Spannung oder des Flusses (3) aufweisen.

4. Vorrichtung nach Anspruch 2, dadurch gekennzeichnet, daß die Mittel zur verzögerten Zündsteuerung (9,...14) Zahler sind, die von den Erfassungsmitteln (3, 4, 5) ausgelöst werden und von den Mitteln zur Berechnung der Verzögerung (7) mit einer Zähldauer ($\Delta T$) geladen werden.

## Claims

1. A method of controlling a variable speed asynchronous motor (M) supplied with AC from a current commutator (C) having controlled semiconductors ($T_1... T_6$) and controlling the power supply of the phase windings of the motor (M) stator from DC energy supplied by a current generator (P, H), wherein the current (Id) circulating in the commutator (C) is held at an adjustable value and wherein the current commutator (C) is controlled by setting a firing delay ($\Delta T$) for its controlled semiconductors ($T_1...T_6$), characterized in that said firing delay ($\Delta T$) is defined with reference to starting instants ($t_{01}...t_{06}$) corresponding to the vectors representing the fundamental components of the voltages (e) at the terminals of the magnetizing inductances (Lm) of the stator phase windings passing through a phase angle of a predetermined value, and that it is determined from the characteristics of the motor in order to obtain an internal phase angle ($\varphi i$) between the fundamental components of the voltages (e) at the terminals of the equivalent magnetizing inductances (Lm) and equivalent currents (is) in each phase, without measuring said angle which is as well as the current (Id) deduced from a law of definition preestablished as a function of the conditions of motor (M) utilization.

2. An apparatus for controlling a variable speed asynchronous motor (M) supplied with AC from a current commutator (C) having controlled semiconductors ($T_1...T_6$) and controlling the power supply to the phase windings of the motor (M) stator from DC energy supplied by a current generator (P, H), characterized in that it comprises :

– means (3, 4, 5) for detecting the passages of the fundamental components of the voltages (e) at the terminals of the magnetizing inductances (Lm) of the stator phase windings through an arbitrary but constant phase angle determining starting instants ($t_{01}...t_{06}$) for the firing delay of the controlled semiconductors ($T_1... T_6$) of the current commutator (C),

– means (6) for measuring the stator frequency (fs),

– means for calculating the phase angle (8) to deliver a phase angle ($\varphi i$) which is desirable between the fundamental components of the voltage at the terminals of the magnetezing inductance (Lm) and the current (is) in each stator phase winding, said value ($\varphi i$) resulting from the application of a law of definition preestablished as a function of the value of the stator frequency ($f_s$) delivered by the measuring means (6) and from a reference value (p), representative of a traction or a braking instruction,

– means for calculating the delay (7) to deliver the duration of the firing delay ($\Delta T$) to be applied to the controlled semiconductors ($T_1...T_6$) of the current commutator (c) as deduced from the stator frequency ($f_s$) delivered by the measuring means (6) and from the value of the phase angle ($\varphi i$) delivered by the phase angle calculating means (8),

– and means for controlling delayed firing (9,...14) of the controlled semiconductors ($T_1...T_6$) of the current commutator (c) operating under the control of the detector means (3, 4, 5) and the delay calculating means (7).

3. An apparatus according to claim 2, characterized in that the detector means include voltage or flux sensors (3).

4. An apparatus according to claim 2, characterized in that the means for delayed firing control (9,...14) are counters which are enabled by the detector means (3, 4, 5) and which are loaded with a count duration $\Delta T$ by the delay calculating means (7).

Fig. 1

Fig. 2

Fig. 3

Fig. 4

Fig:5

Fig: 7

Fig.6